# EUROPÄISCHE PATENTSCHRIFT

(11) **EP 2 836 739 B1**
(45) Veröffentlichungstag und Bekanntmachung des Hinweises auf die Patenterteilung: **30.03.2016**
(21) Anmeldenummer: 13719437.9
(22) Anmeldetag: 05.04.2013
(51) Int. Cl.: F16F 15/14

(54) **FLIEHKRAFTPENDELEINRICHTUNG**
CENTRIFUGAL PENDULUM DEVICE
DISPOSITIF DE PENDULE CENTRIFUGE

(30) Priorität: 13.04.2012 DE 102012206038
(43) Veröffentlichungstag der Anmeldung: 18.02.2015
(73) Patentinhaber: Schaeffler Technologies AG & Co. KG, 91074 Herzogenaurach (DE)
(72) Erfinder: JUNKER, Uli, 77652 Offenburg (DE)
(86) Internationale Anmeldenummer: PCT/EP2013/057165
(87) Internationale Veröffentlichungsnummer: WO 2013/152994

(56) Entgegenhaltungen:
- EP-A2- 1 241 353
- DE-A1-102009 050 670
- DE-A1-102010 028 849

## Beschreibung

Die Erfindung betrifft eine Fliehkraftpendeleinrichtung, insbesondere für einen Antriebsstrang eines brennkraftmaschinengetriebenen Kraftfahrzeugs, aufweisend ein um eine Drehachse drehbares Pendelmassenträgerteil, wenigstens eine an dem Pendelmassenträgerteil unter Fliehkrafteinwirkung verlagerbar angeordnete Pendelmasse und wenigstens eine Pendelrolle mit wenigstens einem Bund zum von dem Pendelmassenträgerteil beabstandeten Führen der wenigstens einen Pendelmasse entlang einer Pendelrollenbahn.

Aus der DE 10 2006 028 556 A1 ist Drehmomentübertragungseinrichtung im Antriebsstrang eines Kraftfahrzeugs zur Drehmomentübertragung zwischen einer Antriebseinheit, insbesondere einer Brennkraftmaschine, mit einer Abtriebswelle, insbesondere einer Kurbelwelle, und einem Getriebe mit mindestens einer Getriebeeingangswelle, mit einer Fliehkraftpendeleinrichtung, die mehrere Pendelmassen umfasst, die mit Hilfe von Laufrollen an einer Pendelmassenträgereinrichtung relativ zu dieser bewegbar angebracht sind, und mit mindestens einer Kupplungseinrichtung und/oder mit mindestens einer Drehschwingungsdämpfungseinrichtung, dadurch gekennzeichnet, dass die Laufrollen jeweils mindestens einen Bund aufweisen, der unter Fliehkrafteinwirkung auf die Pendelmasse in axialer Richtung zwischen der Pendelmasse und der Pendelmassenträgereinrichtung angeordnet ist, um die Drehmomentübertragungseinrichtung insbesondere im Hinblick auf die im Betrieb auftretende Geräuschentwicklung zu optimieren.

Eine weitere Fliehkraftpendeleinrichtung ist aus der DE102009050670 bekannt.

Der Erfindung liegt die Aufgabe zugrunde, eine eingangs genannte Drehmomentübertragungseinrichtung baulich und/oder funktional zu verbessern.

Die Lösung der Aufgabe erfolgt mit einer Fliehkraftpendeleinrichtung, insbesondere für einen Antriebsstrang eines brennkraftmaschinengetriebenen Kraftfahrzeugs, aufweisend ein um eine Drehachse drehbares Pendelmassenträgerteil, wenigstens eine an dem Pendelmassenträgerteil unter Fliehkrafteinwirkung verlagerbar angeordnete Pendelmasse und wenigstens eine Pendelrolle mit wenigstens einem Bund zum von dem Pendelmassenträgerteil beabstandeten Führen der wenigstens einen Pendelmasse entlang einer Pendelrollenbahn, bei der die Pendelrollenbahn abschnittsweise eine Freistellung für den wenigstens einen Bund aufweist.

Mithilfe der Fliehkraftpendeleinrichtung kann eine Kompensation von Drehungleichförmigkeiten verbessert sein. Derartige Drehungleichförmigkeiten können insbesondere aufgrund periodisch ablaufender Verbrennungsvorgänge in der Brennkraftmaschine auftreten. Der Antriebsstrang kann einen Drehschwingungsdämpfer aufweisen. Der Drehschwingungsdämpfer kann ein Flanschteil aufweisen. Der Drehschwingungsdämpfer kann ein Eingangsteil und ein Ausgangsteil aufweisen. Das Eingangsteil des Drehschwingungsdämpfers kann einer Brennkraftmaschine zugeordnet sein. Das Ausgangsteil des Drehschwingungsdämpfers kann einer Reibungskupplung zugeordnet sein. Das Ausgangsteil des Drehschwingungsdämpfers kann ein Flanschteil aufweisen. Der Drehschwingungsdämpfer kann ein Zweimassenschwungrad sein. Der Antriebsstrang kann eine Reibungskupplung aufweisen. Die Reibungskupplung kann ein Flanschteil aufweisen. Die Reibungskupplung kann eine Kupplungsscheibe aufweisen. Der Antriebsstrang kann einen Drehmomentwandler aufweisen. Der Drehmomentwandler kann ein Flanschteil aufweisen. Das Flanschteil der Reibungskupplung kann das Pendelmassenträgerteil sein. Die Kupplungsscheibe der Reibungskupplung kann das Pendelmassenträgerteil sein. Das Flanschteil des Drehschwingungsdämpfers kann das Pendelmassenträgerteil sein. Das Flanschteil des Ausgangsteils des Drehschwingungsdämpfers kann das Pendelmassenträgerteil sein. Das Flanschteil des Drehmomentwandlers kann das Pendelmassenträgerteil sein.

Die Pendelrollenbahn kann an dem Pendelmassenträgerteil angeordnet sein. Die Pendelrollenbahn kann an der wenigstens einen Pendelmasse angeordnet sein. Für die wenigstens eine Pendelmasse kann wenigstens eine Pendelrollenbahn vorgesehen sein. Für die wenigstens eine Pendelmasse können zwei Pendelrollenbahnen vorgesehen sein. Die Pendelrollenbahn kann mithilfe eines Durchbruchs gebildet sein. Der Durchbruch kann eine nierenartige Form aufweisen. Der Durchbruch kann einen umlaufenden Rand mit Randabschnitten aufweisen. Ein Randabschnitt kann eine Pendelrollenbahn bilden. Ein Randabschnitt kann einen Anschlag bilden.

Die wenigstens eine Pendelmasse kann entlang einer vorgegebenen Bahn verlagerbar sein. Die wenigstens eine Pendelmasse kann zwischen einer ersten Endlage und einer zweiten Endlage verlagerbar sein. Die wenigstens eine Pendelmasse kann zur Drehachse der Fliehkraftpendeleinrichtung exzentrisch angeordnet sein. Die Fliehkraftpendeleinrichtung kann mehrere, insbesondere zwei, drei öder vier Pendelmassen aufweisen. Die wenigstens eine Pendelmasse kann eine kreisringbogenartige Form aufweisen. Die kreisringbogenartige Form der wenigstens einen Pendelmasse kann sich über einen Mittelpunktswinkel von ca. 160°-190°, insbesondere von ca. 180°, erstrecken. Die kreisringbogenartige Form der wenigstens einen Pendelmasse kann sich über einen Mittelpunktswinkel von ca. 100°-130°, insbesondere von ca. 120°, erstrecken. Die kreisringbogenartige Form der wenigstens einen Pendelmasse kann sich über einen Mittelpunktswinkel von ca. 70°-100°, insbesondere von ca. 90°, erstrecken.

Die wenigstens eine Pendelmasse kann ein einziges Pendelmasseteil aufweisen. Die wenigstens eine Pendelmasse kann zwei Pendelmasseteile aufweisen. Ein Pendelmasseteil kann wenigstens einen Durchbruch zur Bildung einer Pendelrollenbahn aufweisen. Die zwei Pendelmasseteile der wenigstens einen Pendelmasse können einander in Erstreckungsrichtung der Drehachse gegenüberliegend angeordnet sein. Die zwei Pendelmasseteile der wenigstens einen Pendelmasse können einander gegenüberliegend beidseits des Pendelmassenträgerteils angeordnet sein. Die zwei Pendelmasseteile der wenigstens einen Pendelmasse können mit ihren Pendelrollenbahnen fluchtend angeordnet sein. Die zwei Pendelmasseteile der wenigstens einen Pendelmasse können miteinander fest verbunden sein. Die zwei Pendelmasseteile der wenigstens einen Pendelmasse können miteinander vernietet sein.

Die wenigstens eine Pendelrolle kann zur verlagerbaren Anordnung der wenigstens einen Pendelmasse an dem Pendelmassenträgerteil dienen. Die wenigstens eine Pendelrolle kann eine zylinderartige Form aufweisen. Die wenigstens eine Pendelrolle kann eine Drehachse aufweisen. Die Drehachse der wenigstens einen Pendelrolle kann zur Drehachse der Fliehkraftpendeleinrichtung parallel sein. Die wenigstens eine Pendelrolle kann zwei erste Abschnitte aufweisen, die Pendelmasseteilen einer Pendelmasse zugeordnet sind. Die wenigstens eine Pendelrolle kann einen zweiten Abschnitt aufweisen, der dem Pendelmassenträgerteil zugeordnet ist. Die Abschnitte der wenigstens einen Pendelrolle können in Erstreckungsrichtung der Drehachse nebeneinander angeordnet sein. Der zweite Abschnitt kann zwischen den ersten Abschnitten angeordnet sein. Die wenigstens eine Pendelrolle kann an dem zweiten Abschnitt einen größeren Durchmesser als an den ersten Abschnitten aufweisen. Die wenigstens eine Pendelrolle kann eine stufenbolzenartige Form aufweisen. Die wenigstens eine Pendelrolle kann an dem zweiten Abschnitt und an den ersten Abschnitten gleiche Durchmesser aufweisen. Der wenigstens eine Bund der Pendelrolle kann zwischen einem ersten Abschnitt und dem zweiten Abschnitt angeordnet sein. Die wenigstens eine Pendelrolle kann zwei Bunde aufweisen. Die wenigstens eine Pendelrolle kann an dem wenigstens einen Bund einen größeren Durchmesser als an dem ersten Abschnitt und/oder an dem zweiten Abschnitt aufweisen. Der wenigstens eine Bund kann zum Zentrieren der wenigstens einen Pendelrolle dienen. Der wenigstens eine Bund kann dazu dienen, die wenigstens eine Pendelmasse bei Verlagerung von dem Pendelmassenträgerteil beabstandet zu halten, um eine Reibung zu verringern. Die Freistellung kann eine Ausnehmung sein. Die Freistellung kann zur Aufnahme des wenigstens einen Bunds bei einer Schiefstellung der wenigstens einen Pendelrolle dienen.

Die erfindungsgemäße Fliehkraftpendeleinrichtung ermöglicht einen Schutz des wenigstens einen Bunds und des Pendelmassenträgerteils auch bei Schiefstellung der wenigstens einen Pendelrolle. Der wenigstens eine Bund kann bei Schiefstellung der wenigstens einen Pendelrolle ohne Beschädigungsgefahr in den Bereich der Freistellung eintauchen. Der wenigstens eine Bund und das Pendelmassenträgerteil sind vor einer Kollision geschützt. Ein Verschleiß des wenigstens einen Bunds und des Pendelmassenträgerteils ist verringert.

Die Pendelrollenbahn kann zwei Endabschnitte aufweisen und die Freistellung kann an den Endabschnitten der Pendelrollenbahn angeordnet sein. Die Endabschnitte können in Umfangsrichtung der Fliehkraftpendeleinrichtung gerichtet sein. Die Pendelrollenbahn kann einen radial inneren Abschnitt aufweisen und die Freistellung kann an dem radial inneren Abschnitt der Pendelrollenbahn angeordnet sein. Die Pendelrollenbahn kann mit der Freistellung an dem Pendelmassenträgerteil angeordnet sein. Die Pendelrollenbahn kann mit der Freistellung an der wenigstens einen Pendelmasse angeordnet sein. Die Freistellung kann an dem Pendelmassenträgerteil oder an der wenigstens einen Pendelmasse in Erstreckungsrichtung der Drehachse beidseits angeordnet sein. Die Freistellung kann mithilfe einer Anprägung gebildet sein. Die Anprägung kann mit einer Schräge, einer Fase oder einem Radius ausgeführt sein.

Zusammenfassend und mit anderen Worten dargestellt ergeben sich somit durch die Erfindung unter anderem angeprägte Rollenbahnen bei einem Fliehkraftpendel. Eine Rollenbahn im Flansch kann an der Stelle, an der eine Kollisionsgefahr besteht, mit einer Anprägung versehen sein, in die ein Zentrierbord gefahrlos eintauchen kann Aus Gründen der Flächenpressung zwischen einer Rolle und einer Flanschbahn kann die Anprägung nur an den Bahnenden bzw. radial innen angebracht sein. In einem "normalen" Schwingbereich der Rolle, bzw. im Bereich einer maximalen Flächenpressung kann der volle Blechquerschnitt vorhanden sein. Die Anprägung kann an Pendelmassen oder an einem Flansch angebracht sein.

Mit "kann" sind insbesondere optionale Merkmale der Erfindung bezeichnet. Demzufolge gibt es jeweils ein Ausführungsbeispiel der Erfindung, das das jeweilige Merkmal oder die jeweiligen Merkmale aufweist.

Nachfolgend werden Ausführungsbeispiele der Erfindung unter Bezugnahme auf Figuren näher beschrieben. Aus dieser Beschreibung ergeben sich weitere Merkmale und Vorteile. Konkrete Merkmale dieser Ausführungsbeispiele können allgemeine Merkmale der Erfindung darstellen. Mit anderen Merkmalen verbundene Merkmale dieser Ausführungsbeispiele können auch einzelne Merkmale der Erfindung darstellen.

Es zeigen schematisch und beispielhaft:
- Fig. 1: eine Fliehkraftpendeleinrichtung mit einem Pendelmassenträgerteil, einer Pendelmasse und zwei Pendelrollen,
- Fig. 2: eine Pendelrollenbahn ohne Freistellung in Draufsicht,
- Fig. 3: eine Fliehkraftpendeleinrichtung mit einem Pendelmassenträgerteil, einer zweiteiligen Pendelmasse und einer Pendelrolle in gerader Position in ausschnittsweiser Schnittdarstellung entlang der in Fig. 2 mit A-A bezeichneten Linie,
- Fig. 4: eine Fliehkraftpendeleinrichtung mit einem Pendelmassenträgerteil, einer zweiteiligen Pendelmasse und einer Pendelrolle in schräger Position in ausschnittsweiser Schnittdarstellung entlang der in Fig. 2 mit A-A bezeichneten Linie,
- Fig. 5: eine Pendelrollenbahn mit radial innerer und endseitiger Freistellung in Draufsicht,
- Fig. 6: eine Fliehkraftpendeleinrichtung mit einem Pendelmassenträgerteil, einer zweiteiligen Pendelmasse und einer Pendelrolle in schräger Position in ausschnittsweiser Schnittdarstellung entlang der in Fig. 5 mit B-B bezeichneten Linie,
- Fig. 7: eine Pendelrollenbahn mit endseitigen Freistellungen in Draufsicht und
- Fig. 8: eine Fliehkraftpendeleinrichtung mit einem Pendelmassenträgerteil, einer zweiteiligen Pendelmasse und einer Pendelrolle in schräger Position in ausschnittsweiser Schnittdarstellung entlang der in Fig. 7 mit C-C bezeichneten Linie,

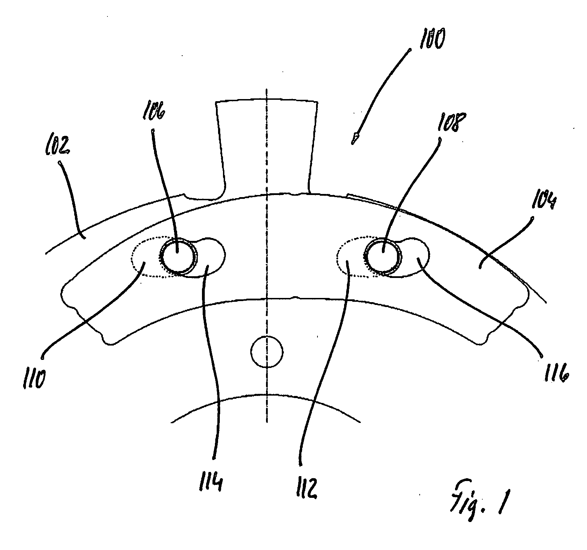

Fig. 1 zeigt eine Fliehkraftpendeleinrichtung 100 mit einem Pendelmassenträgerteil 102, einer zweiteiligen Pendelmasse 104 und zwei Pendelrollen 106, 108. Das Pendelmassenträgerteil 102 weist eine scheibenartige Form mit zwei Seitenflächen auf. Das Pendelmassenträgerteil 102 gehört zu einem Ausgangsteil eines Drehschwingungsdämpfers. Die Pendelmasse 104 weist zwei Pendelmasseteile auf. Die Pendelmasseteile sind an den Seitenflächen des Pendelmassenträgerteils 102 einander gegenüberliegend angeordnet. Die Pendelmasseteile weisen jeweils eine bogenartige Form auf. Die Pendelmasseteile weisen jeweils einen radial inneren Randabschnitt auf. Der radial innere Randabschnitt weist eine kreisbogenartige Form auf. Die Pendelmasseteile weisen jeweils einen radial äußeren Randabschnitt auf. Der radial äußere Randabschnitt weist eine kreisbogenartige Form auf. Die Pendelmasseteile weisen jeweils in Umfangsrichtung weisende Endabschnitte auf. Die Pendelmasseteile weisen jeweils eine plattenartige Form auf. Die Pendelmasseteile sind mit ihren inneren Randabschnitten, ihren äußeren Randabschnitten und ihren Endabschnitten zueinander deckungsgleich angeordnet. Die Pendelmasseteile sind miteinander fest verbunden. Die Pendelmasseteile sind miteinander vernietet.

Zur verlagerbaren Anordnung der Pendelmasse 104 an dem Pendelmassenträgerteil 102 dienen die zwei Pendelrollen 106, 108. Das Pendelmassenträgerteil 102 weist für die Pendelrollen 106, 108 nierenartig gebogene Durchbrechungen 110, 112 auf. Die Durchbrechungen 110, 112 des Pendelmassenträgerteils 102 bilden Pendelrollenbahnen für die Pendelrollen 106, 108. Die Pendelmasse 104 weist für die Pendelrollen 106, 108 nierenartig gebogene Durchbrechungen 114, 116 auf. Die Durchbrechungen 114, 116 der Pendelmasse 104 bilden Pendelrollenbahnen für die Pendelrollen 106, 108. Die Durchbrechungen 110, 112 des Pendelmassenträgerteils 102 und die Durchbrechungen 114, 116 der Pendelmasse 104 sind einander entgegengesetzt gebogen. Die Pendelmasse 104 ist relativ zu dem Pendelmassenträgerteil 102 zwischen zwei Endlagen verlagerbar angeordnet. In der Fig. 1 ist die Pendelmasse 104 in einer Endlage gezeigt.

Die Pendelrollen 106, 108 weisen jeweils eine bolzenartige Form mit einem Mittelabschnitt und zwei Endabschnitten auf. Die Pendelrollen 106, 108 weisen jeweils an ihrem Mittelabschnitt und an ihren Endabschnitten gleiche Durchmesser auf. Die Pendelrollen 106, 108 sind jeweils mit ihrem Mittelabschnitt an dem Pendelmassenträgerteil 102 angeordnet. Die Pendelmasseteile sind an den Endabschnitten der Pendelrollen 106, 108 angeordnet. Zwischen den Endabschnitten und dem Mittelabschnitt weisen die Pendelrollen 106, 108 jeweils einen Bund auf. Die Bünde weisen jeweils einen größeren Durchmesser als der Mittelabschnitt und die Endabschnitte auf.

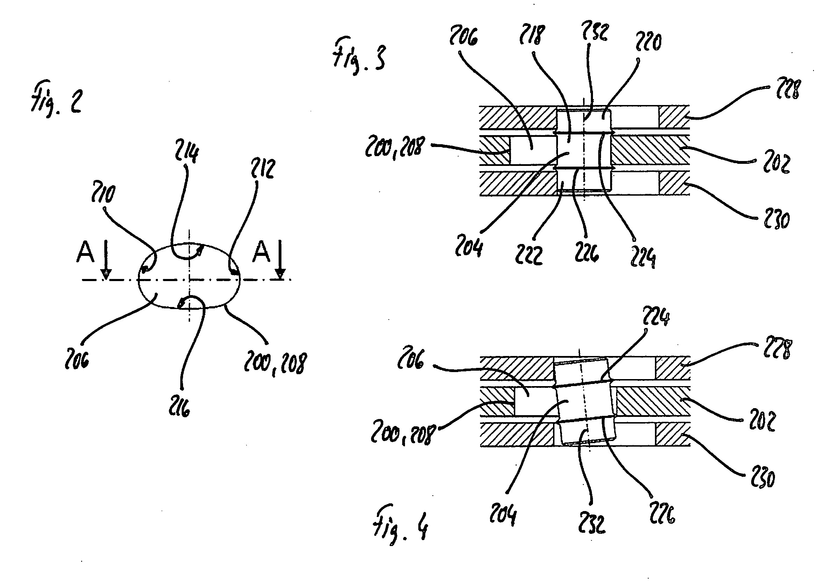

Fig. 2 zeigt eine Pendelrollenbahn 200 ohne Freistellung in Draufsicht. Fig. 3 zeigt eine Fliehkraftpendeleinrichtung mit einem Pendelmassenträgerteil 202, einer zweiteiligen Pendelmasse und einer Pendelrolle 204 in gerader Position in ausschnittsweiser Schnittdarstellung entlang der in Fig. 2 mit A-A bezeichneten Linie. Fig. 4 zeigt die Fliehkraftpendeleinrichtung in schräger Position. Die Pendelmasse ist in den Darstellungen jeweils ausgelenkt und befindet sich in einer Endlage.

Die Pendelrollenbahn 200 ist mithilfe einer Durchbrechung 206 gebildet. Die Durchbrechung 206 ist in dem Pendelmassenträgerteil 202 angeordnet. Die Durchbrechung 206 weist eine nierenartige Form auf. Die Durchbrechung 206 weist einen begrenzenden Rand 208 auf. Der Rand 208 dient zur Bildung der Pendelrollenbahn 200. Die Pendelrollenbahn 200 weist zwei Endabschnitte 210, 212, einen radial äußeren Abschnitt 214 und einen radial inneren Abschnitt 216 auf.

Die Pendelrolle 204 weist eine Mittelabschnitt 218 und zwei Endabschnitte 220, 222 auf. Die Pendelrolle 204 weist zwischen dem Mittelabschnitt 218 und dem Endabschnitt 220 einen Bund 224 auf. Die Pendelrolle 204 weist zwischen dem Mittelabschnitt 218 und dem Endabschnitt 222 einen Bund 226 auf. Die Pendelrolle 204 weist eine zylindrische Form auf. Der Mittelabschnitt 218 weist eine zylindrische Oberfläche auf, mit der die Pendelrolle 204 an einem Pendelmasseträgerteil 202 läuft. Der Endabschnitt 220 weist eine zylindrische Oberfläche auf, mit der die Pendelrolle 204 an einem Pendelmasseteil 228 der Pendelmasse läuft. Der Endabschnitt 222 weist eine zylindrische Oberfläche auf, mit der die Pendelrolle 204 an einem Pendelmasseteil 230 der Pendelmasse läuft. Die Pendelrolle 204 weist an dem Mittelabschnitt 218 und an den Endabschnitten 220, 222 gleiche Durchmesser auf. Die Bünde 224, 226 stehen über die Oberfläche des Mittelabschnitts 218 und der Endabschnitte 220, 222 über. In der geraden Position ist eine Drehachse 232 der Pendelrolle 204 zur Drehachse der Fliehkraftpendeleinrichtung bzw. des Pendelmassenträgerteils 202 parallel gerichtet.

Die Pendelmasseteile 228, 230 sind in Erstreckungsrichtung der Drehachse der Fliehkraftpendeleinrichtung bzw. des Pendelmassenträgerteils 202 von dem Pendelmassenträgerteil 202 derart beabstandet, dass die Pendelmasse relativ zu dem Pendelmassenträgerteil 202 reibungsarm verlagerbar ist. Zwischen dem Pendelmasseteil 228 und dem Pendelmassenträgerteil 202 ist ein Zwischenraum vorhanden, in den der Bund 224 eingreift. Zwischen dem Pendelmasseteil 230 und dem Pendelmassenträgerteil 202 ist ein Zwischenraum vorhanden, in den der Bund 226 eingreift. Die Bünde 224, 226 dienen zur Beabstandung der Pendelmasseteile 228, 230 von dem Pendelmassenträgerteil 202.

Bei einem Betrieb der Fliehkraftpendeleinrichtung, insbesondere bei einem Start-Stopp-Betrieb einer Brennkraftmaschine, kann die Pendelrolle 204 unter Umständen eine schräge Position einnehmen, wie in Fig. 4 gezeigt. Die Drehachse 232 der Pendelrolle 204 ist dann zur Drehachse der Fliehkraftpendeleinrichtung bzw. des Pendelmassenträgerteils 202 schräg gerichtet. Die Bünde 224, 226 können mit dem Rand 208 der Durchbrechung 206 kollidieren. Bei der in Fig. 4 gezeigten Schrägstellung der Pendelrolle 204 taucht der Bund 224 frei in die Durchbrechung 206 ein. Bei der in Fig. 4 gezeigten Schrägstellung der Pendelrolle 204 kollidiert der Bund 226 mit dem Rand 208 der Durchbrechung 206. Fig. 2, Fig. 3 und Fig. 4 beziehen sich auf den Stand der Technik.

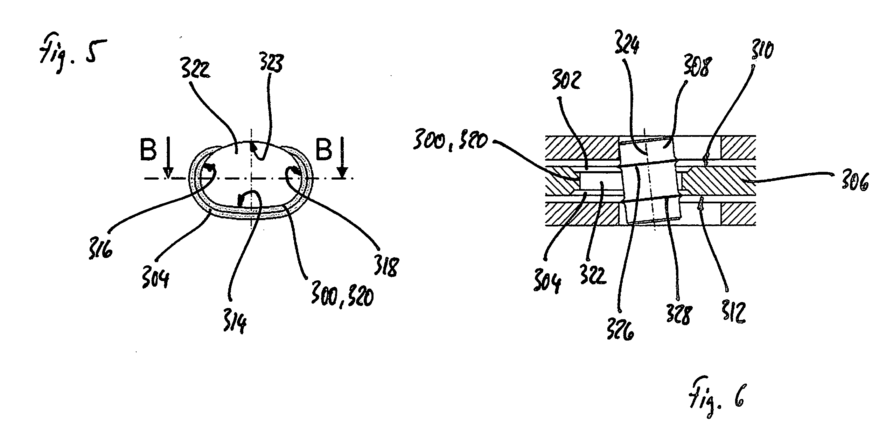

Fig. 5 zeigt eine Pendelrollenbahn 300 mit radial innerer und endseitiger Freistellung 302, 304 in Draufsicht. Fig. 6 zeigt eine Fliehkraftpendeleinrichtung mit einem Pendelmassenträgerteil 306, einer zweiteiligen Pendelmasse und einer Pendelrolle 308 in schräger Position in ausschnittsweiser Schnittdarstellung entlang der in Fig. 5 mit B-B bezeichneten Linie. Die Pendelmasse ist in Fig. 6 ausgelenkt gezeigt und befindet sich in einer Endlage. Das Pendelmassenträgerteil 306 weist zwei Seitenflächen 310, 312 auf. Die Freistellung 302 ist an der Seitenfläche 310 angeordnet. Die Freistellung 304 ist an der Seitenfläche 312 angeordnet. Die Freistellungen 302, 304 sind an dem radial inneren Abschnitt 314 und an den Endabschnitten 316, 318 der Pendelrollenbahn 300 bzw. des Rands 320 der Durchbrechung 322 angeordnet. Die Freistellungen 302, 304 sind jeweils als schräge Anprägung ausgeführt. Die Freistellungen 302, 304 bilden Ausnehmungen. An dem radial äußeren Abschnitt 323 der Pendelrollenbahn 300 bzw. des Rands 320 der Durchbrechung 322 ist die volle Stärke des Pendelmassenträgerteils 306 vorhanden. Damit ist eine hohe Tragfähigkeit gewährleistet. In der in Fig. 6 gezeigten schrägen Position der Pendelrolle 308 ist die Drehachse 324 der Pendelrolle 308 zur Drehachse der Fliehkraftpendeleinrichtung bzw. des Pendelmassenträgerteils 306 schräg gerichtet. Die Bünde 326, 328 der Pendelrolle 308 können ohne Kollision mit dem Pendelmassenträgerteil 306 in die Freistellungen 302, 304 eintauchen. Bei der in Fig. 6 gezeigten Schrägstellung der Pendelrolle 308 taucht der Bund 326 frei in die Durchbrechung 322 ein. Bei der in Fig. 6 gezeigten Schrägstellung der Pendelrolle 308 taucht der Bund 328 frei in die Freistellung 304 ein. Im Übrigen wird ergänzend insbesondere auf Fig. 1, Fig. 2, Fig. 3 und Fig. 4 sowie die zugehörige Beschreibung verwiesen.

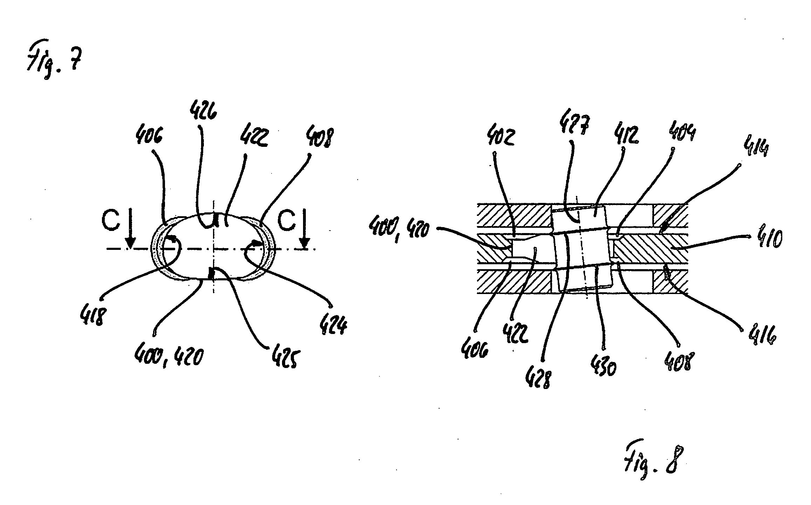

Fig. 7 zeigt eine Pendelrollenbahn 400 mit endseitigen Freistellungen 402, 404, 406, 408 in Draufsicht. Fig. 8 zeigt eine Fliehkraftpendeleinrichtung mit einem Pendelmassenträgerteil 410, einer zweiteiligen Pendelmasse und einer Pendelrolle 412 in schräger Position in ausschnittsweiser Schnittdarstellung entlang der in Fig. 7 mit C-C bezeichneten Linie. Die Pendelmasse ist in Fig. 8 ausgelenkt gezeigt und befindet sich in einer Endlage. Das Pendelmassenträgerteil 410 weist zwei Seitenflächen 414, 416 auf. Die Freistellungen 402, 404 sind an der Seitenfläche 414 angeordnet. Die Freistellungen 406, 408 sind an der Seitenfläche 416 angeordnet. Die Freistellungen 402, 406 sind an dem Endabschnitt 418 der Pendelrollenbahn 400 bzw. des Rands 420 der Durchbrechung 422 angeordnet. Die Freistellungen 404, 408 sind an dem Endabschnitt 424 der Pendelrollenbahn 400 bzw. des Rands 420 der Durchbrechung 422 angeordnet. Die Freistellungen 402, 404, 406, 408 sind jeweils als schräge Anprägung ausgeführt. Die Freistellungen 402, 404, 406, 408 bilden Ausnehmungen. An dem radial inneren Abschnitt 425 der Pendelrollenbahn 400 bzw. des Rands 420 der Durchbrechung 422 ist die volle Stärke des Pendelmassenträgerteils 410 vorhanden. An dem radial äußeren Abschnitt 426 der Pendelrollenbahn 400 bzw. des Rands 420 der Durchbrechung 422 ist die volle Stärke des Pendelmassenträgerteils 410 vorhanden. Damit ist eine hohe Tragfähigkeit gewährleistet. In der in Fig. 6 gezeigten schrägen Position der Pendelrolle 412 ist die Drehachse 427 der Pendelrolle 412 zur Drehachse der Fliehkraftpendeleinrichtung bzw. des Pendelmassenträgerteils 410 schräg gerichtet. Die Bünde 428, 430 der Pendelrolle 412 können ohne Kollision mit dem Pendelmassenträgerteil 410 in die Freistellungen 402, 404, 406, 408 eintauchen. Bei der in Fig. 6 gezeigten Schrägstellung der Pendelrolle 412 taucht der Bund 428 frei in die Durchbrechung 422 ein. Bei der in Fig. 6 gezeigten Schrägstellung der Pendelrolle 412 taucht der Bund 430 frei in die Freistellung 408 ein. Im Übrigen wird ergänzend insbesondere auf Fig. 1, Fig. 2, Fig. 3 und Fig. 4 sowie die zugehörige Beschreibung verwiesen.

### Bezugszeichenliste

- 100: Fliehkraftpendeleinrichtung
- 102: Pendelmassenträgerteil
- 104: Pendelmasse
- 106: Pendelrolle
- 108: Pendelrolle
- 110: Durchbrechung
- 112: Durchbrechung
- 114: Durchbrechung
- 116: Durchbrechung

- 200: Pendelrollenbahn
- 202: Pendelmassenträgerteil
- 204: Pendelrolle
- 206: Durchbrechung
- 208: Rand
- 210: Endabschnitt der Pendelrollenbahn
- 212: Endabschnitt der Pendelrollenbahn
- 214: radial äußeren Abschnitt
- 216: radial inneren Abschnitt
- 218: Mittelabschnitt
- 220: Endabschnitt der Pendelrolle
- 222: Endabschnitt der Pendelrolle
- 224: Bund
- 226: Bund
- 228: Pendelmasseteil
- 230: Pendelmasseteil
- 232: Drehachse

- 300: Pendelrollenbahn
- 302: Freistellung
- 304: Freistellung
- 306: Pendelmassenträgerteil

- 308: Pendelrolle
- 310: Seitenfläche
- 312: Seitenfläche
- 314: radial innerer Abschnitt
- 316: Endabschnitt der Pendelrollenbahn
- 318: Endabschnitt der Pendelrollenbahn
- 320: Rand
- 322: Durchbrechung
- 323: radial äußerer Abschnitt
- 324: Drehachse
- 326: Bund
- 328: Bund

- 400: Pendelrollenbahn
- 402: Freistellung
- 404: Freistellung
- 406: Freistellung
- 408: Freistellung
- 410: Pendelmassenträgerteil
- 412: Pendelrolle
- 414: Seitenfläche
- 416: Seitenfläche
- 418: Endabschnitt der Pendelrollenbahn
- 420: Rand
- 422: Durchbrechung
- 424: Endabschnitt der Pendelrollenbahn
- 425: radial innerer Abschnitt
- 426: radial äußerer Abschnitt
- 427: Drehachse
- 428: Bund
- 430: Bund

## Patentansprüche

1. Fliehkraftpendeleinrichtung (100), insbesondere für einen Antriebsstrang eines brennkraftmaschinengetriebenen Kraftfahrzeugs, aufweisend ein um eine Drehachse drehbares Pendelmassenträgerteil (102, 306, 410), wenigstens eine an dem Pendelmassenträgerteil (102, 306, 410) unter Fliehkrafteinwirkung verlagerbar angeordnete Pendelmasse (104) und wenigstens eine Pendelrolle (106, 108, 308, 412) mit wenigstens einem Bund (326, 328, 428, 430) zum von dem Pendelmassenträgerteil (102, 306, 410) beabstandeten Führen der wenigstens einen Pendelmasse (104) entlang einer Pendelrollenbahn (300, 400), **dadurch gekennzeichnet, dass** die Pendelrollenbahn (300, 400) abschnittsweise eine Freistellung (302, 304, 402, 404, 406, 408) für den wenigstens einen Bund (326, 328, 428, 430) aufweist.

2. Fliehkraftpendeleinrichtung (100) nach Anspruch 1, **dadurch gekennzeichnet, dass** die Pendelrollenbahn (300, 400) zwei Endabschnitte (316, 318, 418, 424) aufweist und die Freistellung (302, 304, 402, 404, 406, 408) an den Endabschnitten (316, 318, 418, 424) der Pendelrollenbahn (300, 400) angeordnet ist.

3. Fliehkraftpendeleinrichtung (100) nach einem der vorhergehenden Ansprüche, **dadurch gekennzeichnet, dass** die Pendelrollenbahn (300) einen radial inneren Abschnitt (314) aufweist und die Freistellung (302, 304) an dem radial inneren Abschnitt (314) der Pendelrollenbahn (300) angeordnet ist.

4. Fliehkraftpendeleinrichtung (100) nach einem der vorhergehenden Ansprüche, **dadurch gekennzeichnet, dass** die Pendelrollenbahn (300, 400) mit der Freistellung (302, 304, 402, 404, 406, 408) an dem Pendelmassenträgerteil (102, 306, 410) angeordnet ist.

5. Fliehkraftpendeleinrichtung (100) nach einem der vorhergehenden Ansprüche, **dadurch gekennzeichnet, dass** die Pendelrollenbahn mit der Freistellung an der wenigstens einen Pendelmasse (104) angeordnet ist.

6. Fliehkraftpendeleinrichtung (100) nach einem der vorhergehenden Ansprüche, **dadurch gekennzeichnet, dass** die Freistellung (302, 304, 402, 404, 406, 408) an dem Pendelmassenträgerteil (102, 306, 410) oder an der wenigstens einen Pendelmasse (104) in Erstreckungsrichtung der Drehachse beidseits angeordnet ist.

7. Fliehkraftpendeleinrichtung (100) nach einem der vorhergehenden Ansprüche, **dadurch gekennzeichnet, dass** die Freistellung (302, 304, 402, 404, 406, 408) mithilfe einer Anprägung gebildet ist.

8. Fliehkraftpendeleinrichtung (100) nach Anspruch 7, **dadurch gekennzeichnet, dass** die Anprägung mit einer Schräge, einer Fase oder einem Radius ausgeführt ist.

## Claims

1. Centrifugal pendulum device (100), in particular for a drive train of a motor vehicle which is driven by internal combustion engine, having a pendulum mass carrier part (102, 306, 410) which can be rotated about a rotational axis, at least one pendulum mass (104) which is arranged on the pendulum mass carrier part (102, 306, 410) such that it can be displaced under the action of centrifugal force, and at least one pendulum roller (106, 108, 308, 412) with at least one flange (326, 328, 428, 430) for guiding the at least one pendulum mass (104) along a pendulum roller track (300, 400) such that it is spaced apart from the pendulum mass carrier part (102, 306, 410), **characterized in that** the pendulum roller track (300, 400) has, in sections, a clearance (302, 304, 402, 404, 406, 408) for the at least one flange (326, 328, 428, 430).

2. Centrifugal pendulum device (100) according to Claim 1, **characterized in that** the pendulum roller track (300, 400) has two end sections (316, 318, 418, 424), and the clearance (302, 304, 402, 404, 406, 408) is arranged on the end sections (316, 318, 418, 424) of the pendulum roller track (300, 400).

3. Centrifugal pendulum device (100) according to either of the preceding claims, **characterized in that** the pendulum roller track (300) has a radially inner section (314), and the clearance (302, 304) is arranged on the radially inner section (314) of the pendulum roller track (300).

4. Centrifugal pendulum device (100) according to one of the preceding claims, **characterized in that** the pendulum roller track (300, 400) is arranged with the clearance (302, 304, 402, 404, 406, 408) on the pendulum mass carrier part (102, 306, 410).

5. Centrifugal pendulum device (100) according to one of the preceding claims, **characterized in that** the pendulum roller track is arranged with the clearance on the at least one pendulum mass (104).

6. Centrifugal pendulum device (100) according to one of the preceding claims, **characterized in that** the clearance (302, 304, 402, 404, 406, 408) is arranged on both sides in the direction of extent of the rotational axis on the pendulum mass carrier part (102, 306, 410) or on the at least one pendulum mass (104).

7. Centrifugal pendulum device (100) according to one of the preceding claims, **characterized in that** the clearance (302, 304, 402, 404, 406, 408) is formed with the aid of an embossment.

8. Centrifugal pendulum device (100) according to Claim 7, **characterized in that** the embossment is configured with a chamfer, a bevel or a radius.

## Revendications

1. Dispositif de pendule centrifuge (100), en particulier pour une chaîne cinématique d'un véhicule automobile entraîné par un moteur à combustion interne, présentant une partie de support de masse de pendule (102, 306, 410) pouvant tourner autour d'un axe de rotation, au moins une masse de pendule (104) disposée de manière déplaçable sous l'effet de la force centrifuge sur la partie de support de masse de pendule (102, 306, 410) et au moins un rouleau de pendule (106, 108, 308, 412) avec au moins un épaulement (326, 328, 428, 430) pour le guidage à distance de la partie de masse de pendule (102, 306, 410) de l'au moins une masse de pendule (104) le long d'une trajectoire de rouleau de pendule (300, 400), **caractérisé en ce que** la trajectoire de rouleau de pendule (300, 400) présente en partie une zone libre (302, 304, 402, 404, 406, 408) pour l'au moins un épaulement (326, 328, 428, 430).

2. Dispositif de pendule centrifuge (100) selon la revendication 1, **caractérisé en ce que** la trajectoire de rouleau de pendule (300, 400) présente deux portions d'extrémité (316, 318, 418, 424) et la zone libre (302, 304, 402, 404, 406, 408) est disposée au niveau des extrémités (316, 318, 418, 424) de la trajectoire de rouleau de pendule (300, 400).

3. Dispositif de pendule centrifuge (100) selon l'une quelconque des revendications précédentes, **caractérisé en ce que** la trajectoire de rouleau de pendule (300) présente une portion radialement interne (314) et la zone libre (302, 304) est disposée au niveau de la portion radialement interne (314) de la trajectoire de rouleau de pendule (300).

4. Dispositif de pendule centrifuge (100) selon l'une quelconque des revendications précédentes, **caractérisé en ce que** la trajectoire de rouleau de pendule (300, 400) avec la zone libre (302, 304, 402, 404, 406, 408) est disposée au niveau de la partie de support de masse de pendule (102, 306, 410).

5. Dispositif de pendule centrifuge (100) selon l'une quelconque des revendications précédentes, **caractérisé en ce que** la trajectoire de rouleau de pendule avec la zone libre est disposée au niveau de l'au moins une masse de pendule (104).

6. Dispositif de pendule centrifuge (100) selon l'une quelconque des revendications précédentes, **caractérisé en ce que** la zone libre (302, 304, 402, 404, 406, 408) est disposée de chaque côté au niveau de la partie de support de masse de pendule (102, 306, 410) ou au niveau de l'au moins une masse de pendule (104) dans la direction d'étendue de l'axe de rotation.

7. Dispositif de pendule centrifuge (100) selon l'une quelconque des revendications précédentes, **caractérisé en ce que** la zone libre (302, 304, 402, 404, 406, 408) est formée à l'aide d'un marquage.

8. Dispositif de pendule centrifuge (100) selon la revendication 7, **caractérisé en ce que** le marquage est réalisé avec un biseau, un chanfrein ou un arrondi.
